# FASCICULE DE BREVET EUROPEEN

(11) **EP 3 351 430 B1**
(45) Date de publication et mention de la délivrance du brevet: **18.08.2021**
(21) Numéro de dépôt: 18152805.0
(22) Date de dépôt: 22.01.2018
(51) Int. Cl.: B60Q 3/14, G02B 5/22

(54) **MODULE D'AFFICHAGE**
ANZEIGEGERÄT
DISPLAY MODULE

(30) Priorité: 20.01.2017 FR 1750494
(43) Date de publication de la demande: 25.07.2018
(73) Titulaire: Valeo Comfort and Driving Assistance, 94046 Créteil Cedex (FR)
(72) Inventeur: LEKMINE, Djamel, 94046 Créteil Cedex (FR)
(74) Mandataire: Delplanque, Arnaud

(56) Documents cités:
- EP-A1- 1 189 078
- US-A1- 2013 179 811

## Description

La présente invention concerne un module de commande comportant au moins deux dispositifs d'affichage, dont l'un au moins est un module de commande rotatif, tel qu'utilisé pour contrôler et régler des fonctions diverses, et en particulier pour un habitacle de véhicule.

Dans les habitacles de véhicules, la multiplication des fonctions à contrôler telles que la climatisation, l'autoradio et les systèmes de navigation a conduit à une multiplication des modules de commandes et des modules d'affichage associés, comme les boutons et molettes. Les modules de commande sont souvent associés à au moins une surface d'affichage.

Les surfaces d'affichage servent en particulier à afficher des informations quant au fonctionnement et aux paramètres des unités fonctionnelles du véhicule contrôlées par les modules de commande reliés aux surfaces d'affichage. Pour ce faire, les surfaces d'affichage présentent un ou plusieurs symboles lumineux, qui peuvent être éclairés ou non, éclairés avec différentes intensités ou bien avec des couleurs d'éclairage différentes.

En particulier, différentes techniques d'affichage sont utilisables selon la complexité et le nombre de symboles différents à afficher. Pour les cas les plus simples, un masque gravé ou détouré sur un guide de lumière avec une seule diode peut suffire. Lorsque plus de deux états (allumé/éteint) sont possibles, un affichage avec plusieurs diodes, des caches mobiles ou des surfaces à cristaux liquides et des guides de lumière est indiqué. Pour afficher des caractères (température de flux d'air, longueur d'onde de station radio), un écran à cristaux liquides à afficheurs sept segments peut être utilisé. Pour un affichage complexe, avec des images et des caractères variés, un écran d'affichage, par exemple à matrice à cristaux liquides ou à diodes organiques (OLED) peut être utilisé.

Ces modules d'affichage avec des technologies d'affichage différentes peuvent difficilement être combinés dans un même module de commande du fait d'une inhomogénéité d'apparence dans la luminosité, en particulier les portions éteintes qui n'émettent pas activement de lumière, et la totalité de la surface lorsqu'elle est éteinte. Cette inhomogénéité diminue la qualité du module de commande ou d'affichage perçue par l'utilisateur. Le document EP 1 189 078 A1 divulgue un module d'affichage comportant au moins deux dispositifs d'affichage, les modules d'affichage comportant respectivement une surface d'affichage et un masque sombre recouvrant la surface d'affichage, les masques sombre présentant un facteur d'absorption global compris entre 50 et 80 %, où de plus les coefficients de transmission des masques sombres diffèrent de moins de 3 % pour les longueurs d'onde de la gamme spectrale visible et en ce que les masques sombres sont disposés par rapport aux surfaces d'affichage de sorte à présenter un écart axial avec les dites surfaces d'affichage et en ce que les écarts axiaux des deux dispositifs d'affichage diffèrent de moins de 0,3 mm. Le document US 2013/179811 A1 divulgue un module de commande comportant un module d'affichage dont la surface d'affichage présente une forme circulaire, le dispositif d'affichage étant un module de commande cylindrique.

Afin de résoudre au moins partiellement le problème précédemment mentionné, l'invention a pour objet un module d'affichage selon la revendication 1. Des modes de réalisation additionnels sont définis dans les revendications dépendantes.

Les modules d'affichage ou de commande ainsi obtenus présentent un aspect homogène sur toutes leurs surfaces d'affichage, à l'état éteint ou allumé. Le module d'affichage peut en outre comporter une ou plusieurs des caractéristiques suivantes, prises seules ou en combinaison.

Les masques sombres comportent une épaisseur de matériau transparent teinté dans la masse.

Les masques sombres comportent une épaisseur de polycarbonate transparent teinté dans la masse avec un colorant noir.

Les masques sombres sont de forme bombée en direction d'un utilisateur.

Au moins une des surfaces d'affichage comporte un masque opaque disposé au niveau d'un dioptre de sortie d'un guide de lumière.

Au moins une des surfaces d'affichage comporte un écran à cristaux liquides rétroéclairé.

Au moins une des surfaces d'affichage comporte un écran à matrice de transistors en couche mince.

La distance entre la surface d'affichage et le masque sombre est comprise entre un millimètre et deux millimètres.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre schématiquement un module de commande dans un habitacle de véhicule, pourvu d'un module d'affichage,
- la figure 2 montre schématiquement un module de commande selon l'invention en vue de face,
- la figure 3 montre plus en détail un dispositif de commande de module de commande des figures précédentes,
- la figure 4 montre schématiquement en coupe axiale un dispositif d'affichage,
- la figure 5 montre une vue en coupe axiale de deux des dispositifs de commande du module de commande de la figure 2.

Sur toutes les figures, les mêmes références se rapportent aux mêmes éléments.

Les réalisations décrites en faisant référence aux figures sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres modes de réalisations.

Les termes « premier », « deuxième » etc. sont donnés ici pour distinguer entre eux des éléments ayant une fonction semblable. Ils ne servent donc qu'à référencer les éléments sans ordre de préférence particulière. En particulier, les objets désignés comme « premier », « deuxième » et équivalents peuvent être interchangés sans dévier du concept de l'invention.

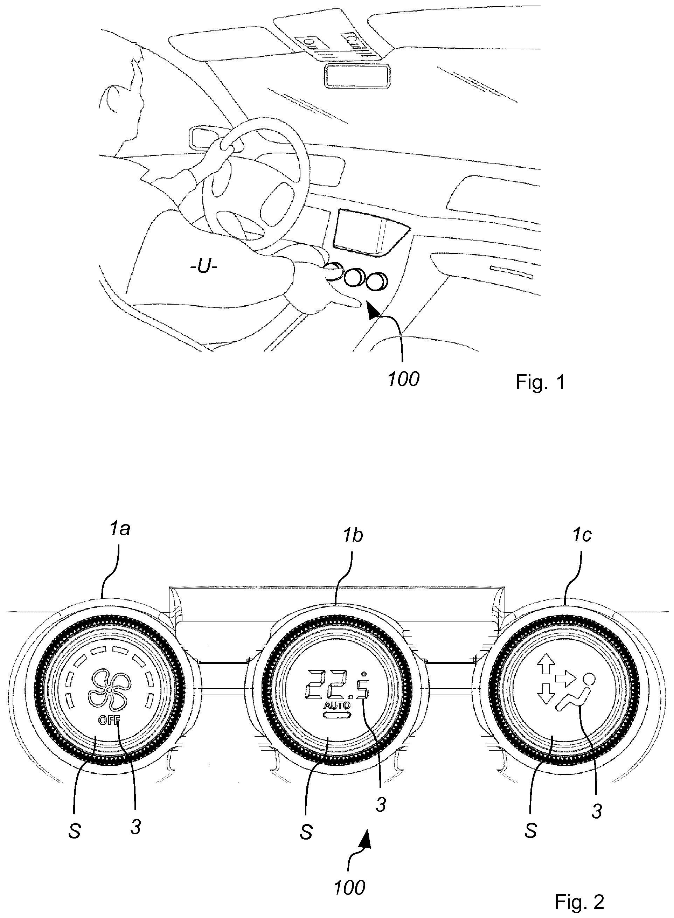

En figure 1 est montré de façon schématique un module de commande 100 dans un habitacle de véhicule, ici en particulier au niveau de la console centrale.

Le module de commande 1 est installé dans la console centrale du véhicule : la paroi du panneau avant verticale ou inclinée, située entre le conducteur et le passager à l'avant du véhicule. Cet emplacement permet au conducteur, qui est ici l'utilisateur U du module de commande 100, d'interagir aisément avec le module de commande 100 tout en l'ayant en périphérie de son champ de vision en situation normale de conduite.

Un tel module de commande 100 permet la commande d'au moins une fonction d'un organe du véhicule automobile telle que la commande des fonctions d'un système de climatisation, d'un système audio, d'un système de téléphonie ou encore d'un système de navigation. Le module de commande 1 peut également servir pour les commandes de lève-vitres, de positionnement des rétroviseurs extérieurs ou encore pour le déplacement de sièges motorisés ou pour commander des lumières intérieures, un verrouillage central, un toit ouvrant, les feux de détresse ou les lumières d'ambiance.

En figure 2 est montré de face un module de commande 100 selon un mode de réalisation de l'invention tel que le perçoit un utilisateur *U*.

Le module de commande 100 comporte trois dispositifs de commande 1a, 1b, 1c. Les dispositifs de commande 1a, 1b, 1c sont ici réalisés sous forme de boutons rotatifs cylindriques avec une surface d'affichage S au centre de leur surface frontale, c'est-à-dire la surface circulaire orientée vers l'utilisateur.

En alternative, les surfaces d'affichage S peuvent être implémentées dans un module d'affichage ne comprenant pas de dispositifs de commande 1a, 1b, 1c. Le module d'affichage est alors associé à un ou plusieurs modules et dispositifs de commande, éventuellement séparés et espacés du module d'affichage, disposés généralement autour du module d'affichage.

La surface d'affichage S dirigée vers l'utilisateur permet au moins localement de définir une normale dirigée vers l'utilisateur. Les termes « axial », « avant », « après », « derrière », « devant » et équivalents sont définis par rapport à cette normale.

Le premier dispositif de commande la comporte le premier dispositif d'affichage qui présente une surface d'affichage *S* avec des symboles éclairés 3. Les symboles éclairés 3 sont ici des surfaces gravées dans un masque opaque, posé sur une pluralité de guides de lumière sélectivement éclairés par des diodes. Le module de commande 100 est ici en particulier utilisé pour contrôler un module de climatisation du véhicule.

Le module de commande 100 ou un ou plusieurs des dispositifs de commande la, 1b, 1c peuvent en alternative être seulement des modules ou dispositifs d'affichage, qui affichent par exemple des informations relatives à des fonctions du véhicule, fonctions qui sont commandées par des modules ou dispositifs de commande séparés.

Le dispositif de commande la est ici utilisé pour paramétrer la puissance d'un flux d'air du module de climatisation du véhicule. Les symboles lumineux 3 comportent donc un schéma d'hélice de ventilateur et des barres de puissance. Le schéma d'hélice est par exemple éclairé dès que le module de climatisation est activé, et les barres de puissance sont allumées en nombre correspondant à une puissance relative du flux d'air du module de climatisation.

Le dispositif de commande 1b est ici utilisé pour contrôler la température du flux d'air du module de climatisation du véhicule. Les symboles lumineux 3 comportent donc un voyant de régulation automatique, et un écran à cristaux liquides ici sous forme d'afficheurs à segments, par exemple sept-segments ou quatorze-segments. Le voyant de régulation automatique indique par exemple l'état enclenché ou non d'un régulateur de température du flux d'air, tandis que les afficheurs à segments indiquent la température cible ou mesurée dudit flux d'air.

Le dispositif de commande 1c est ici utilisé pour contrôler la sortie du flux d'air du module de climatisation du véhicule. Les symboles lumineux 3 comportent un schéma d'utilisateur assis et des flèches de direction de sortie d'air. Le dispositif de commande 1c est alors utilisé pour contrôler des volets et clapets de redirection d'un flux d'air issu d'une unité de conditionnement d'air (filtration, chauffage, climatisation et/ou déshumidification).

Ces volets et clapets répartissent le flux d'air conditionné entre une ou plusieurs conduites qui dirigent une partie du flux d'air sélectivement vers les pieds des passagers, vers le haut du corps des passagers et/ou vers le pare-brise et les vitres pour procéder à un désembuage.

Le schéma d'utilisateur assis et les flèches de direction de sortie d'air sont par exemple détourés ou découpés dans un masque opaque qui recouvre plusieurs guides de lumière sélectivement éclairés. En alternative, les symboles lumineux 3 peuvent être découpés dans un masque recouvrant une surface rétroéclairée, et comporter des surfaces à cristaux liquides dont l'orientation contrôlée permet de faire passer ou non la lumière de la surface rétroéclairée.

D'autres modes de réalisation prévoient que la surface d'affichage *S* comporte un ou plusieurs écrans d'affichage, par exemple à diodes électroluminescentes LED, en particulier organiques OLED, ou bien des matrices de pixels sélectivement éclairés.

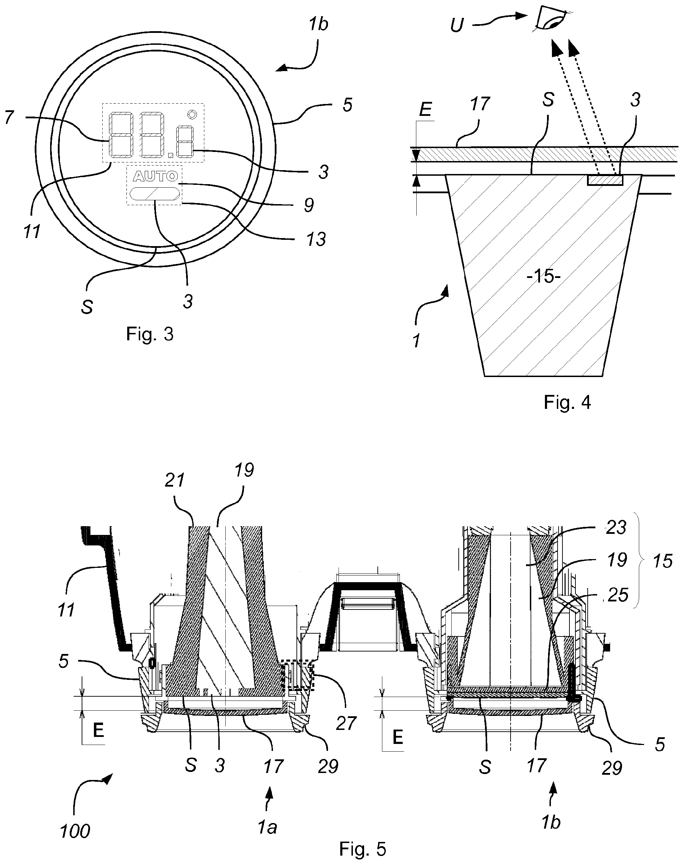

La figure 3 montre plus en détail le dispositif de commande 1b. Le dispositif de commande 1b comporte un rotor 5, ici sous forme de molette annulaire entourant la surface d'affichage *S*. Le rotor 5 est ici mis en rotation par l'utilisateur *U* pour modifier la température du flux d'air.

Les moyens d'affichage du dispositif de commande 1b comprennent des afficheurs à segments 7 (sept ou quatorze segments) et un guide de lumière (non-visible en figure 3) débouchant sur un masque 9, collé ou imprimé et découpé, gravé ou gratté. Les afficheurs à segments 7 affichent les chiffres correspondant à la température actuelle ou cible du flux d'air, ou bien la température mesurée dans l'habitacle. Le guide de lumière et le masque 9 sont alors utilisés pour l'affichage d'un voyant d'activation de régulation indiquant que l'unité de climatisation est en train de réguler la température du flux d'air.

La surface d'affichage comporte donc deux surfaces actives 11, 13, correspondant respectivement aux afficheurs à segments 7 pour la première 11 et au masque 9 gravé pour la deuxième 13.

La surface complémentaire aux surfaces actives 11, 13 est une surface de fond. Elle est de teinte uniforme sombre et matte, par exemple noire avec une surface de forte granulosité pour éviter des réflexions. L'aspect mat et sombre est par exemple obtenu par collage, emboîtement ou surmoulage d'une épaisseur en plastique sombre, ou bien par application ou impression d'une couche de peinture ou d'encre opaque de couleur sombre, généralement noire ou grise.

La figure 4 montre une vue en coupe axiale d'un dispositif d'affichage 1. Le dispositif d'affichage 1 comporte des moyens d'affichage 15, par exemple des afficheurs à segments, des guides de lumière, des diodes. Les moyens d'affichage 15 comportent une surface supérieure plane sur au moins une portion de sa surface qui forme la surface d'affichage *S*.

Les moyens d'affichage 15 peuvent comporter des guides de lumière dont un dioptre de sortie est recouvert par un masque gravé, découpé, collé ou surmoulé, des diodes électroluminescentes, une matrice d'éléments actifs tels qu'un écran à transistors en couches minces, par exemple à diodes électroluminescentes (LED), en particulier organiques (OLED), ou bien à cristaux liquides (LCD pour « liquid crystal display »), des afficheurs à segments ou à pixels carrés, en particulier rétroéclairés.

Au dessus des moyens d'affichage 15 se trouve un masque sombre 17. Le masque sombre 17 est transparent et présente un facteur d'absorption énergétique global sur la gamme spectrale visible relativement élevé, typiquement entre 50 et 80 %. Par facteur d'absorption énergétique global on entend ici le taux d'absorption énergétique, quotient du flux lumineux incident dans toute la gamme spectrale visible (400 à 800nm) par le masque sombre 17, et du flux lumineux absorbé dans toute la gamme spectrale visible lors de la traversée de l'épaisseur axiale du masque sombre 17.

Il peut par exemple être réalisé au moyen d'une plaque en matériau transparent, teinté dans la masse, par exemple du polycarbonate (PC) ou polyméthacrylate de méthyle (PMMA) teinté au moyen d'un colorant ou de pigments tels que le noir de carbone. Ces matériaux sont aisés à mettre en forme, en particulier par moulage, relativement peu coûteux, et résistants aux ultraviolets et à l'abrasion.

Le masque sombre 17 peut en particulier s'étendre légèrement au-delà de la surface d'affichage *S* du dispositif d'affichage 1, par exemple si ladite surface d'affichage est au centre d'un cadre. Lorsque le module d'affichage ou de commande 100 comporte plusieurs masques sombres 17 recouvrant chacun un dispositif d'affichage ou de commande 1, les masques 17 utilisés sont semblables en termes de taux d'absorption. Ils peuvent en particulier être aussi semblables dans leur épaisseur, leur état de surface, leur forme et/ou dans le matériau utilisé pour une plus grande homogénéité d'apparence.

Les masques sombres 17 peuvent en particulier être réalisés par un même atelier, ou une même machine, par exemple au moyen d'un moule unique ou au moins de moules semblable pour présenter des propriétés aussi proches que possible.

Les masques sombres 17, combinés avec les surfaces de fond également sombres, permettent de cacher les moyens d'affichage 15 de la vision de l'utilisateur *U* et d'obtenir, à l'état éteint des moyens d'affichage 15, une surface apparaissant comme unie, sombre et brillante recouvrant les dispositifs d'affichage 1 ou de commande 1a, 1b, 1c.

Lors de l'allumage des moyens d'affichage 15, les symboles lumineux 3 apparaissent dans cette surface unie sombre sans que l'utilisateur *U* ait aperçu les moyens d'affichage 15. L'expérience utilisateur s'en trouve améliorée, ce qui augmente la qualité perçue par l'utilisateur *U* du module d'affichage ou de commande 100.

Pour cacher plus avant les moyens d'affichage 15 et réduire les images secondaires par réflexion en direction de l'utilisateur, le masque sombre 17 et la surface d'affichage S sont disposées en retrait l'un par rapport à l'autre, avec un écart axial *E*. Le dioptre formé entre le masque sombre 17 et l'espace vide formé par l'écart axial *E* introduit une réflexion et une réfraction supplémentaire sur le trajet des rayons lumineux qui décrivent des réflexions multiples. La présence de cet écart axial *E* diminue l'intensité perçue des artefacts d'affichage indésirables engendrés par les réflexions multiples.

Cet écart axial *E* est compris entre 0,5 et 10mm, préférentiellement entre 1 et 5mm, et pour les modes de réalisation préférés entre 1 et 2mm, typiquement autour de 1,5mm.

Le trajet de deux rayons lumineux représentés par des flèches pointillées est représenté en figure 4. Les rayons partent d'un symbole lumineux 3 de la surface d'affichage S et traversent le masque sombre 17 avant d'être émis en direction de l'oeil d'un utilisateur *U*.

La figure 5 montre en coupe axiale une partie du module de commande 100 de la figure 2, avec une pluralité de dispositifs de commande, dont seulement deux 1a, 1b sont représentés.

Les dispositifs de commande la, 1b comportent, comme précédemment mentionné, des moyens d'affichage 15 différents, avec chacun une surface d'affichage S recouverte par un masque sombre 17, ici de forme légèrement bombée, convexe vers l'utilisateur *U*.

Les deux masques sombres 17 ont des propriétés optiques semblables.

Si les masques sombres 17 considérés sont supposés apparaître de teinte semblable, leur coefficient de transmission pour chaque longueur d'onde est semblable au moins sur la gamme spectrale du domaine visible. Pour une longueur d'onde donnée, la différence de coefficient de transmission est alors inférieure à une valeur donnée, par exemple 3 % en valeur absolue ou relative quelle que soit la longueur d'onde considérée du domaine visible (400 à 800nm).

Par coefficient de transmission on entend ici le quotient de la luminosité de la lumière incidente et de la luminosité de la lumière mesurée après avoir traversé le masque sombre 17.

Les masques sombres 17 peuvent aussi être réalisés de teinte légèrement différente. Le paramètre d'ajustement pouvant être rapproché est alors le coefficient de transmission global, moyenné sur la gamme spectrale visible, éventuellement avec une pondération avec les coefficients photopiques ou scotopiques selon l'usage diurne ou nocturne majoritairement attendu du module de commande 100. La différence de coefficient de transmission, moyenné sur la gamme spectrale visible, est alors inférieure à une valeur donnée, par exemple 3 % en valeur absolue ou relative.

L'écart axial E est ici mesuré au centre du masque sombre 17, correspondant au maximum d'écartement. Les deux dispositifs de commande 1a, 1b représentés en figure 5 présentent un écart axial *E* qui, pour une valeur approximative de 1,5mm ne diffèrent que de moins d'une valeur prédéterminée, par exemple de 0,3mm. La valeur de la différence d'écart axial *E* peut notamment être conditionnée par les tolérances de fabrication et d'assemblage des pièces concernées. Le principe de l'invention est de réduire cette différence autant que faire se peut, par un dimensionnement et un assemblage semblables de la majeure partie des pièces.

La différence d'écart axial *E* entre les deux dispositifs de commande 1a, 1b est en particulier inférieure à une valeur prédéterminée, idéalement la plus faible possible. Pour le calcul de cette valeur prédéterminée, les paramètres à prendre en compte sont en particulier les tolérances de fabrication et d'assemblage. La différence d'écart axial *E* est alors uniquement le résultat des tolérances, le fabriquant visant essentiellement à rendre identiques dans la mesure du possible les écarts axiaux *E* des deux dispositifs de commande 1a, 1b.

Le premier dispositif de commande la comporte un guide de lumière 19, intégré dans un corps opaque 21 qui entoure le guide de lumière 19 de forme générale conique. Le guide de lumière comporte des portions allongées axialement jusqu'à la surface d'affichage S et qui forment les symboles lumineux 3. Le corps opaque 21 est surmoulé au guide de lumière 19, et s'étend en particulier entre les portions allongées axialement du guide de lumière 19, de sorte à réaliser le masque détourant les symboles lumineux 3, et par extension la surface de fond.

Le guide de lumière 19 est éclairé par une diode (non représentée) qui se trouve au fond du dispositif de commande la, et émet de la lumière qui entre dans le guide de lumière par un dioptre d'entrée.

Le deuxième dispositif de commande 1b comporte un guide de lumière 23, de forme tubulaire, dont le dioptre de sortie comporte un masque imprimé et gravé, par exemple par grattage laser. Le masque gravé porte les caractères 3 correspondant au voyant de régulation.

Le deuxième dispositif de commande 1b comporte aussi un guide de lumière conique 19, dont le dioptre de sortie recouvre un écran 25 à transistors en couches minces ou TFT, pour « thin film transistor », portant les afficheurs à segments 7, de sorte à rétroéclairer les caractères 3 affichés par les afficheurs 7.

Les guides de lumière 19, 23 du deuxième dispositif de commande 1b sont aussi incorporés dans un corps de remplissage 21, surmoulé ou emboîté sur les guides de lumière 21, 23.

Les dispositifs de commande la, 1b s'étendent axialement à partir d'un stator 11 intégré dans une paroi de l'habitacle de véhicule, et comportent sur leur portion supérieure un rotor 5 annulaire entourant la surface d'affichage *S*. La position en rotation du rotor 5, et en particulier le passage du rotor 5 par des positions correspondant à un basculement logique ou électronique, est repérée par un dispositif d'indexage 27, par exemple avec un ou plusieurs capteurs à effet Hall, et des aimants permanents, les uns solidaires du rotor 5, les autres du stator 11, de sorte que les aimants défilent devant les capteurs à effet Hall lors de la rotation du rotor 5.

Les surfaces d'affichage *S* et les masques sombres 17 des différents dispositifs de commande la, 1b sont entourées d'une collerette tubulaire 29, qui forme un rebord vers l'avant du module de commande 100. Cette collerette tubulaire 29 permet de réduire l'incidence de lumière extérieure, par exemple du soleil ou d'un lampadaire, qui risquerait de rendre visible les moyens d'affichage 15 pour l'utilisateur *U*.

La réduction de la différence d'écart axial *E* entre la surface d'affichage *S* et le masque sombre 17 de chaque dispositif d'affichage ou de commande 1a, 1b, 1c permet d'obtenir un aspect harmonieux desdits dispositifs d'affichage ou de commande 1a, 1b, 1c, à la fois lorsque les moyens d'éclairage ou de rétroéclairage (diodes, écran, etc.) sont éteints et lorsqu'ils sont allumés.

Cet aspect harmonieux est alors relativement indépendant de la technologie utilisée par les moyens d'affichage 15 pour générer les caractère 3, de sorte que différentes technologies peuvent harmonieusement être implémentées au sein d'un même module d'affichage ou de commande 100.

## Revendications

1. Module de commande comportant un module d'affichage, comportant au moins deux dispositifs d'affichage (1, 1a, 1b, 1c), les dispositifs d'affichage (1, 1a, 1b, 1c)
comportant respectivement une surface d'affichage (*S*) et un masque sombre (17) recouvrant la surface d'affichage (*S*), les masques sombre (17) présentant un facteur d'absorption global compris entre 50 et 80 %, **caractérisé en ce que** les coefficients de transmission des masques sombres (17) diffèrent de moins de 3 % pour les longueurs d'onde de la gamme spectrale visible, **en ce que** les masques sombres (17) sont disposés par rapport aux surfaces d'affichage (*S*) de sorte à présenter un écart axial (*E*) avec lesdites surfaces d'affichage (*S*) compris entre 0,5 et 10mm, et **en ce que** les écarts axiaux (*E*) des deux dispositifs d'affichage (1, 1a, 1b, 1c) diffèrent de moins de 0,3mm et **en ce que** les surfaces d'affichage (*S*) présentent une forme circulaire, et **en ce qu'**au moins un des dispositifs d'affichage est un module de commande cylindrique (1a, 1b, 1c) comportant une molette annulaire formant rotor (5) entourant une portion du module de commande cylindrique (1a, 1b, 1c).

2. Module selon la revendication précédente, **caractérisé en ce que** les masques sombres (17) comportent une épaisseur de matériau transparent teinté dans la masse.

3. Module selon la revendication précédente, **caractérisé en ce que** les masques sombres (17) comportent une épaisseur de polycarbonate transparent teinté dans la masse avec un colorant noir.

4. Module selon l'une des revendications précédentes, **caractérisé en ce que** les masques sombres (17) sont de forme bombée en direction d'un utilisateur.

5. Module selon l'une des revendications précédentes, **caractérisé en ce qu'**au moins une des surfaces d'affichage (*S*) comporte un masque opaque (9) disposé au niveau d'un dioptre de sortie d'un guide de lumière (19).

6. Module selon l'une au moins des revendications précédentes, **caractérisé en ce qu'**au moins une des surfaces d'affichage (*S*) comporte un écran à cristaux liquides rétroéclairé.

7. Module selon l'une au moins des revendications précédentes, **caractérisé en ce qu'**au moins une des surfaces d'affichage (*S*) comporte un écran à matrice de transistors en couche mince.

8. Module selon l'une des revendications précédentes, **caractérisé en ce que** la distance entre la surface d'affichage (*S*) et le masque sombre (17) est comprise entre un millimètre et deux millimètres.

## Patentansprüche

1. Steuermodul mit einem Anzeigemodul, das mindestens zwei Anzeigevorrichtungen (1, 1a, 1b, 1c) aufweist, wobei die Anzeigevorrichtungen (1, la, 1b, 1c) je eine Anzeigefläche (*S*) und eine die Anzeigefläche (*S*) bedeckende dunkle Maske (17) aufweisen, wobei die dunklen Masken (17) einen globalen Absorptionsfaktor zwischen 50 und 80% aufweisen, **dadurch gekennzeichnet, dass** die Übertragungskoeffizienten der dunklen Masken (17) sich für die Wellenlängen des sichtbaren Spektralbereichs um weniger als 3% unterscheiden, dass die dunklen Masken (17) bezüglich der Anzeigeflächen (S) so angeordnet sind, dass sie einen axialen Abstand (E) zu den Anzeigeflächen (S) zwischen 0,5 und 10 mm aufweisen, und dass die axialen Abstände (E) der zwei Anzeigevorrichtungen (1, la, 1b, 1c) sich um weniger als 0,3 mm unterscheiden, und dass die Anzeigeflächen (S) eine Kreisform aufweisen, und dass mindestens eine der Anzeigevorrichtungen ein zylindrisches Steuermodul (la, 1b, 1c) ist, das ein einen Rotor (5) bildendes ringförmiges Rad aufweist, das einen Teil des zylindrischen Steuermoduls (1a, 1b, 1c) umgibt.

2. Modul nach dem vorhergehenden Anspruch, **dadurch gekennzeichnet, dass** die dunklen Masken (17) eine Lage von durchgefärbtem transparentem Werkstoff aufweisen.

3. Modul nach dem vorhergehenden Anspruch, **dadurch gekennzeichnet, dass** die dunklen Masken (17) eine Lage von mit einem schwarzen Farbstoff durchgefärbtem transparentem Polycarbonat aufweisen.

4. Modul nach einem der vorhergehenden Ansprüche, **dadurch gekennzeichnet, dass** die dunklen Masken (17) eine in Richtung eines Benutzers gewölbte Form haben.

5. Modul nach einem der vorhergehenden Ansprüche, **dadurch gekennzeichnet, dass** mindestens eine der Anzeigeflächen (S) eine undurchsichtige Maske (9) aufweist, die im Bereich eines Ausgangsdiopters eines Lichtleiters (19) angeordnet ist.

6. Modul nach mindestens einem der vorhergehenden Ansprüche, **dadurch gekennzeichnet, dass** mindestens eine der Anzeigeflächen (S) einen Flüssigkristallbildschirm mit Hintergrundbeleuchtung aufweist.

7. Modul nach mindestens einem der vorhergehenden Ansprüche, **dadurch gekennzeichnet, dass** mindestens eine der Anzeigeflächen (S) einen Bildschirm mit Dünnschicht-Transistormatrix aufweist.

8. Modul nach einem der vorhergehenden Ansprüche, **dadurch gekennzeichnet, dass** der Abstand zwischen der Anzeigefläche (S) und der dunklen Maske (17) zwischen einem Millimeter und zwei Millimetern liegt.

## Claims

1. Control module comprising a display module, comprising at least two display devices (1, 1a, 1b, 1c), the display devices (1, 1a, 1b, 1c) comprising, respectively, a display surface (S) and a dark mask (17) covering the display surface (S), the dark masks (17) having an overall absorption factor of between 50 and 80%, **characterized in that** the transmission coefficients of the dark masks (17) differ by less than 3% for the wavelengths of the visible spectral range and **in that** the dark masks (17) are arranged with respect to the display surfaces (S) so as to exhibit an axial deviation (E) with said display surfaces (S) of between 0.5 and 10 mm, and **in that** the axial deviations (E) of the two display devices (1, 1a, 1b, 1c) differ by less than 0.3 mm and **in that** the display surfaces (S) have a circular shape, and **in that** at least one of the display devices is a cylindrical control module (la, 1b, 1c) comprising an annular wheel forming a rotor (5) surrounding a portion of the cylindrical control module (la, 1b, 1c).

2. Module according to the preceding claim, **characterized in that** the dark masks (17) comprise a thickness of transparent material that is bulk-coloured.

3. Module according to the preceding claim, **characterized in that** the dark masks (17) comprise a thickness of transparent polycarbonate bulk-coloured with a black dye.

4. Module according to one of the preceding claims, **characterized in that** the dark masks (17) are curved in shape in the direction of a user.

5. Module according to one of the preceding claims, **characterized in that** at least one of the display surfaces (S) comprises an opaque mask (9) arranged at an exit dioptric interface of a light guide (19).

6. Module according to at least one of the preceding claims, **characterized in that** at least one of the display surfaces (S) comprises a backlit liquid crystal screen.

7. Module according to at least one of the preceding claims, **characterized in that** at least one of the display surfaces (S) comprises a thin-film transistor matrix array screen.

8. Module according to one of the preceding claims, **characterized in that** the distance between the display surface (S) and the dark mask (17) is between one millimetre and two millimetres.
